# EUROPÄISCHE PATENTANMELDUNG

(11) **EP 1 190 908 A2**
(43) Veröffentlichungstag der Anmeldung: **27.03.2002**
(21) Anmeldenummer: 01121323.8
(22) Anmeldetag: 06.09.2001
(51) Int. Cl.: B60R 13/02

(54) **Fahrzeuginnenraumverkleidung mit verringerter Blendwirkung an der Windschutzscheibe oder Heckscheibe**

(30) Priorität: 22.09.2000 DE 10046982
(71) Anmelder: DaimlerChrysler AG, 70567 Stuttgart (DE)
(72) Erfinder: Scherber, Werner, Dr., 88697 Bermatingen (DE); Häring, Jochen, Dr., 78464 Konstanz (DE)

(57) **Zusammenfassung**

Die Erfindung betrifft eine Fahrzeuginnenraumverkleidung mit verringerter Blendwirkung an der Windschutzscheibe oder Heckscheibe. Sie umfasst die folgenden Merkmale:
- eine transparente Oberflächenschicht (**2**), deren obere Grenzfläche (**7**) eine nichtglatte Struktur aufweist, wobei Teilbereiche der Grenzfläche (**1**) zur Windschutzscheibe oder Heckscheibe hin geneigt sind;
- eine unterhalb der Oberflächenschicht (**2**) angeordnete matte Absorberschicht (**5**);
- eine zwischen Oberflächenschicht (**2**) und Absorberschicht (**5**) vorhandene Zone mit totalreflektierender Wirkung für unter flachen Winkeln auftreffenden, von außen in den Fahrzeuginnenraum einfallenden Lichtstrahlen;
- Mittel (**7,8,9**) zur Zerstreuung des Lichts, so dass sich für den Fahrzeuginsassen ein natürlicher Helligkeitseindruck ergibt.

## Beschreibung

Die Erfindung betrifft eine Fahrzeuginnenraumverkleidung mit verringerter Blendwirkung an der Windschutzscheibe oder Heckscheibe.

Helle Farbtöne im Pkw-Innenraum vermitteln ein besonders wertanmutendes, großzügiges und freundliches Ambiente und gelten deshalb als eine bevorzugte gestalterische Maßnahme. Eine helle Innenverkleidung wird als Sonderausstattung häufig in Show Cars, auf Messen, usw. eingesetzt, um den edlen, wertvollen Charakters des Fahrzeuges zu unterstreichen.

Ein helles Interieur ist jedoch nicht nur aus Designaspekten interessant, es bietet auch praktische Vorteile aufgrund der verminderten Staub- und Schmutzempfindlichkeit sowie eine deutliche Verbesserung des Klimakomforts aufgrund der geringeren Erwärmung bei direkter Sonneneinstrahlung.

Andererseits führen helle Oberflächen insbesondere im Bereich der Front- und Heckablage zu störenden Spiegelungen in den Scheiben, und vermindern so unter ungünstigen Bedingungen die Wahrnehmungssicherheit drastisch. Dies ist einer der Gründe, warum helle Fahrzeuginnenraumverkleidungen bisher im Serieneinsatz kaum eine Rolle spielen.

Es ist bekannt, dieses Problem durch Entspiegelungsmaßnahmen an den Scheiben selbst zu lösen. Diese Techniken haben sich in der Praxis jedoch nicht durchgesetzt. Antireflexbeschichtungen, wie sie bei der Vergütung von Brillengläsern oder Fotoobjektiven verwendet werden, wären sehr kostspielig, wenn sie auf große Flächen übertragen werden und zudem farbneutral sein sollen. Der Einsatz von 'graded index' - Schichten, also Oberflächen mit einem sanften Übergang des Brechungsindex von Glas (n=1,45) zu Luft (n=1) wäre ebenfalls denkbar, aber praktisch unbrauchbar, da diese Oberflächen unzureichende Härte und Abriebfestigkeit aufweisen und sehr schmutzempfindlich sind.

Die Aufgabe, die der Erfindung zu Grunde liegt, besteht demnach darin, helle, dekorativ ansprechende Oberflächen für den Fahrzeuginnenraum zu schaffen, welche die Verkehrssicherheit nicht durch übermäßige Blendwirkung an den Scheiben beeinträchtigen.

Diese Aufgabe wird mit dem Gegenstand gemäß des Patentanspruchs 1 gelöst. Vorteilhafte Ausführungen der Erfindung sind Gegenstand von Unteransprüchen.

Im Gegensatz zu den obengenannten, bekannten Maßnahmen, die an der Scheibe selbst ansetzen, schlägt die Erfindung vor, die 'Entspiegelung' durch Maßnahmen am Interieur vorzunehmen, und zwar an den Stellen, die sich in der Scheibe spiegeln und die Blendung der Insassen hervorrufen können. Die erfindungsgemäße Innenraumverkleidung wird vor allem im Bereich der Frontablage (Instrumententafel) und/oder der Heckablage angeordnet.

Die Erfindung wird anhand von Ausführungsbeispielen unter Bezugnahme auf Figuren näher erläutert. Es zeigen:
- Fig. 1: eine schematische Darstellung der geometrischen Verhältnisse an der Windschutzscheibe;
- Fig. 2: Querschnitt durch die erfindungsgemäße Fahrzeuginnenraumverkleidung in verschiedenen Ausführungsformen;
- Fig. 3: eine alternative Ausführungsform der erfindungsgemäßen Fahrzeuginnenraumverkleidung.

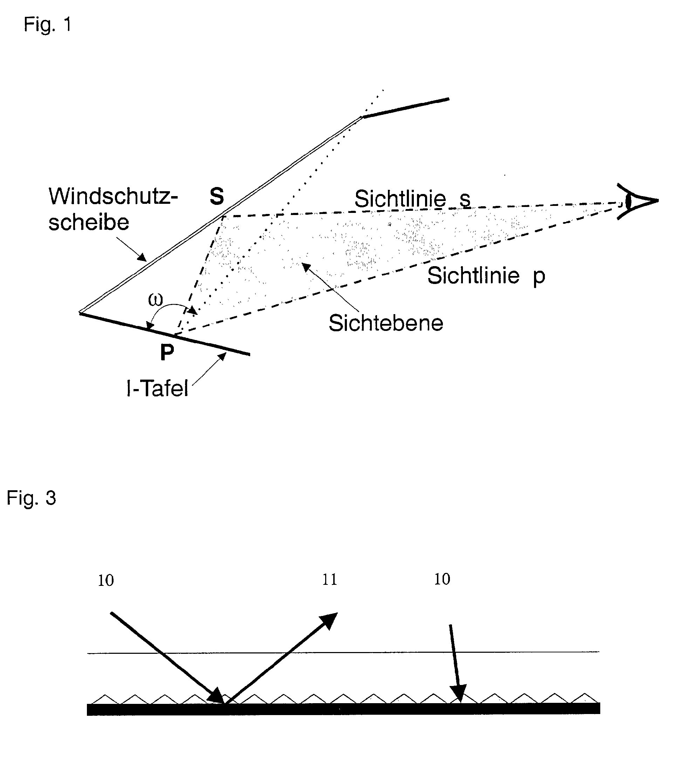

Figur 1 zeigt die geometrischen Verhältnisse an der Frontablage eines Kraftfahrzeugs als wichtigsten Einsatzfall der erfindungsgemäßen Innenraumverkleidung. Die kritischen, für die Blendung verantwortlichen Flächen werden mit einem speziellen richtungsabhängigen Reflexionsverhalten ausgerüstet, welche erfindungsgemäß folgende Bedingungen erfüllen: Für jeden kritischen Punkt P der Ablage (I-Tafel) wird das aus dem Raumwinkel ω einfallende Licht so gelenkt, dass nur wenig Licht in Richtung des Spiegelpunktes S fällt, und über die Sichtlinie s ins Auge des Fahrzeuginsassen gelangt. Aus den übrigen Betrachtungswinkeln, insbesondere aus der Position der Insassen (Sichtlinie p) ergibt sich ein heller Farbeindruck, welcher den umgebenden Materialien entspricht oder mit diesen harmonisiert.

Es ist sofort zu erkennen, dass diese Forderung nicht mit den normalen optischen Eigenschaften der bekannten Oberflächen zu vereinbaren ist. Weiße oder helle Oberflächen kommen durch Streureflexion des Lichtes zustande und besitzen eine diffuse (Lambert'sche) Reflexionscharakteristik. Damit gelangt unabhängig von der Einfallsrichtung immer ein hoher Lichtanteil in Richtung s und führt zur Blendung. Oberflächen mit gerichtetem (spekularem) Reflexionsverhalten, gemeinhin als Spiegel bezeichnet, wären natürlich ebenfalls ungeeignet, da hier unter Umständen eine sehr hohe Lichtintensität in Richtung s oder p gelenkt wird und das Problem dramatisch verschärft würde. Das Reflexionsverhalten aller gängigen Oberflächen liegt irgendwo zwischen den Extremwerten ideal diffus bis spekular. Bei dunkleren Farben wird zusätzlich die Gesamtintensität des gestreuten bzw. reflektierten Lichtes durch Absorptionseffekte reduziert, die Winkelverteilung aber nicht grundsätzlich verändert.

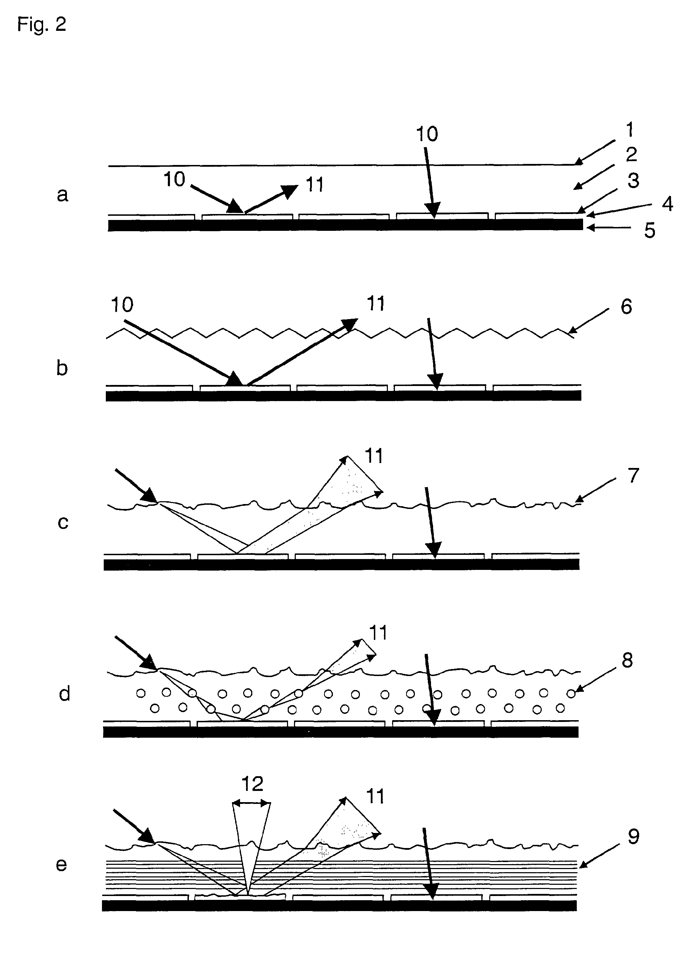

Die anormale Richtungsverteilung der erfindungsgemäßen Fahrzeuginnenraumverkleidung kommt durch das Zusammenwirken mehrerer physikalischer Effekte zustande, was unter Bezugnahme auf Fig. 2 näher erläutert wird. Fig. 2 zeigt mehrere, auf der Frontablage des Fahrzeugs angeordnete Innenraumverkleidungen.

Zunächst wird der Begriff der 'second surface' (SS) eingeführt. Die zu behandelnde Oberfläche wird mit einer lichtdurchlässigen Oberflächenschicht 2, im folgenden auch als Lichtleiter bezeichnet, aus einem flexiblen transparentem Kunststoffmaterial überzogen, dergestalt, dass für die Lichtreflexion nicht mehr die eigentliche Oberfläche 1, sondern die zweite Grenzfläche (SS), also die Unterseite 3 der transparenten Oberflächenschicht 2 verantwortlich ist. Wird die SS nicht durchgehend mit der Unterlage verbunden, sondern nur stellenweise, und befindet sich die SS an den übrigen Stellen in einem geringen Abstand zur Unterlage (Luftspalt), dann kann an dieser Struktur das Phänomen der Totalreflexion beobachtet werden, d.h. flach einfallende Strahlen 10 werden total reflektiert 11 (zu 100%), während Licht aus steileren Einfallswinkeln die Grenzfläche durchdringt und an einer dritten (matt schwarzen) Absorberschicht 5 absorbiert wird. Die Reflexionscharakteristik dieser Konfiguration entspricht schon in Grundzügen den oben genannten Anforderungen, muss aber erfindungsgemäß weiter ausgestaltet werden.

Bekanntlich kann an einer planparallel Schicht von außen kommendes Licht nach Grundgesetzen der Optik nicht totalreflektiert werden. Die bisherigen Überlegungen gelten also nur für Licht, das im Lichtleiter 2 selbst erzeugt würde. Im Sinne der Aufgabenstellung soll jedoch ein natürlicher Helligkeitseffekt vermittelt werden, der nur durch diffuse Licht-Reflexion oder -Streuung aus der Umgebung entstehen kann. Dazu wird die Oberfläche 6 (Fig. 2b) der transparenten Schicht 2 zunächst mit einer rillen- oder kegelförmigen Struktur versehen. Nun kann, wie in Figur 2b gezeigt, Licht 10 ohne weiteres unter flachen Winkeln eindringen und an SS (Oberfläche 3) totalreflektiert 11 werden. Steiler einfallende Strahlen werden dennoch an SS durchgelassen und absorbiert, wenn sie nicht den Grenzwinkel der Totalreflexion überschreiten.

Eine Anordnung nach Figur 2b wäre noch nicht praxistauglich, da die Oberfläche aus der Sicht der Insassen ein spekulares Reflexionsverhalten zeigt und bei ungünstigem Lichteinfall zu hell erscheinen würde. Ein weiterer Grundgedanke der Erfindung ist nun, die überschüssige Lichtmenge durch weitere Maßnahmen zu zerstreuen und optional zusätzlich zu reduzieren, so dass zwar ein angenehmer heller diffuser Farbeindruck entsteht, aber dennoch störende Lichtreflexe in Richtung s unterdrückt werden.

Durch den Übergang von der rillenförmigen Oberfläche auf eine mehr wellenförmige oder unregelmäßig Oberfläche 7, wie in Fig. 2c beispielhaft dargestellt, können Helligkeitsgrad und Zerstreuung graduell eingestellt werden. Maßgebend für die Helligkeit ist der Anteil der Flächenelemente, welche mit einem bestimmten Grenzwinkel nach links zur Lichteinfallsrichtung, also in Richtung Windschutzscheibe orientiert sind (Eintrittsapertur), während die rauhwellige Struktur der übrigen Flächenelemente mehr zur Zerstreuung der austretenden Strahlen 11 beitragen. Totalreflektierte Strahlen 11 werden nun an der Oberfläche 7 des Lichtleiters 2 entweder austreten oder nochmals totalreflektiert, je nach Winkelstellung des Oberflächenelementes (Dies ist in Fig. 2 der Übersichtlichkeit wegen nicht dargestellt). Dieser Effekt ist allerdings für die wahrnehmbare Gesamthelligkeit der Anordnung nicht von Bedeutung, da eingeschlossene Lichtstrahlen auch nach mehrfacher Reflexion wieder austreten und damit nur eine weitere willkommene Lichtzerstreuung stattfindet. Mit den beiden Parametern Eintrittsapertur und Strahlablenkung beim Austritt des Lichts aus der Struktur können bei geeigneter Kombination bereits sehr brauchbare Lösungen erzielt werden. Die Strukturdimensionen sollten größer als die Lichtwellenlänge gewählt werden, aber vorteilhafterweise kleiner als die Auflösungsfähigkeit des Auges, um keine störenden Muster zu erzeugen. Eine günstige Dimensionierung liegt im Bereich von 10 bis 100 Mikrometer.

Neben der in Fig. 2c gezeigten Oberflächenstruktur für den Lichtleiter 2 kann diese auch kleine Prismen, Kegel, Noppen, Rillen oder Wellen aufweisen oder in sonstiger Weise unregelmäßig genarbt sein.

Es wird darauf hingewiesen, dass eine erfindungsgemäße Innenraumverkleidung durchaus eine rillenförmige Oberfläche 6 gemäß Fig. 2b aufweisen kann. Dazu müssen nur zusätzliche Vorkehrungen zur Zerstreuung des Lichts getroffen werden, damit anstatt eines unerwünschten spekularen Reflexionsverhaltens der gewünschte natürliche Helligkeitseindruck entsteht. Mehrere Beispiele für die Lichtzerstreuung, die anstatt oder zusätzlich zur Zerstreuung an der oberen Oberfläche des Lichtleiters vorgesehen sind, werden im folgenden beschrieben.

Anstatt oder zusätzlich zur Zerstreuung des Lichts an der oberen Oberfläche des Lichtleiters 2 kann durch Strukturierung der Unterseite des Lichtleiters 2 eine Zerstreuung des Lichts erreicht werden, wobei die gleichen Gesetzmäßigkeiten gelten.

Die Lichtzerstreuung bzw. die "Weißfärbung" kann alternativ oder zusätzlich durch Maßnahmen im Bereich des Lichtleiters 2 erzielt werden (Fig. 2d). Durch Einlagerung von transparenten Elementen (Streukörper) wird der Strahl aufgrund von Brech- und Streueffekten weiter aufgefächert, ohne an Helligkeit zu verlieren. Durch die Auffächerung entstehen zusätzliche (flache) Winkelbereiche, welche an SS totalreflektiert werden, andererseits gehen ebenfalls erzeugte Winkelbereiche mit steileren Einfall an SS für die Reflexion verloren, was sich im Mittel etwa aufhebt. Der Grad der Zerstreuung kann durch die Anzahl und den Brechungsindex der eingelagerten Elemente geregelt werden, wobei die Differenz zwischen den Brechungsindices des Pigmentmaterials und der transparenten Matrix 2 maßgebend ist. Insofern sind sowohl hochbrechende Streukörper, z.B. aus TiO2, aber auch eingelagerte Hohlräume oder Hohlkugeln verwendbar. Von Bedeutung ist dabei die Größe der Streukörper. Diese sollte bevorzugt im Bereich der Vorwärtsstreuung liegen, also ein Mehrfaches der Lichtwellenlänge betragen, typischerweise einige Mikrometer. Bei kleineren Dimensionen, unterhalb von 0,1 Mikrometern, überwiegt die sogenannte Rayleigh-Streuung mit einer isotropen Streuwinkelverteilung, was einen hohen Lichtanteil in Richtung s werfen und den angestrebten Effekt zunichte machen würde. Es können z.B. kornförmige oder kugelförmige Streukörper, aber auch regellos orientierte transparente Fasern zum Einsatz kommen. Im übrigen ist es natürlich möglich und im Hinblick auf die gewünschte Wirkung unschädlich, die Einlagerungen oder die gesamte Matrix 2 leicht einzufärben, um farbliche Abtönungen passend zum restlichen Interieur oder zur Wagenlackierung zu erreichen oder überschüssige Lichtintensität zu absorbieren.

Die Maßnahme der Zerstreuung durch eingelagerte Körper (Figur 2d) muss mit Bedacht eingesetzt werden, da nicht nur die beschriebenen Effekte der Brechung und Vorwärtsstreuung zur Wirkung kommen, sondern auch der Effekt der Fresnelreflexion, d.h. an jedem Streukörper wird aufgrund der optischen Dichteschwankung ein kleiner Teil reflektiert und damit auch in Richtung s gelangen. Mit einer weiteren Ausführungsform der Erfindung, beispielhaft in Fig. 2e gezeigt, können diese unvermeidlichen Reflexe unterdrückt werden. Grundlage dieser Lösung ist die Erkenntnis, dass die für die Blendung des Fahrers verantwortlichen Lichtstrahlen aus der Instrumententafel unter einem relativ begrenzten Winkelbereich von etwa 50 bis 70° auf die Windschutzscheibe auftreffen (vgl. Fig. 1). Aus der Optik ist bekannt, dass der Reflexionsgrad für schräg auf eine Glasplatte auftreffendes Licht stark abhängig von der Polarisationsrichtung ist. Der Unterschied ist besonders groß am sogenannten Brewster-Winkel, bei dem die parallel zur Einfallsebene polarisierte Lichtwelle komplett unterdrückt wird. Der Brewster-Winkel für eine Glas-Luft-Grenzfläche liegt bei 56°. Durch Polarisierung der aus den Streukörpern stammenden Störstrahlung kann also die gewünschte Richtungsselektivität zwischen den Sichtlinien p und s zusätzlich erhöht werden. Beispielsweise kann ein herkömmliches Polarisationsfilter oberhalb oder unterhalb der Streuzone eingebaut werden. Die Polarisationsebene liegt dabei in der Sichtebene des Fahrers, wobei die Sichtebene definiert ist durch die Blickrichtung des Fahrers und dem sich dort spiegelnden Punkt des Innenraums. Die genannten Polarisationsfilter besitzen aufgrund ihrer Funktion eine generelle Abdunkelung um etwa 50%. Da jedoch bei entsprechender Dimensionierung der übrigen oben beschriebenen Strukturierungsmaßnahmen genügend Licht eingeleitet werden kann, ist der gewünschte helle Farbeindruck gut erreichbar. Eine Variante dieser Technik besteht darin, statt eines Polarisationsfilters transparente, in Richtung der Sichtebene orientierte Fasern einzusetzen. Aufgrund der Mehrfachstreuung (Streureflexion) und dem oben erwähnten Brewster-Effekt werden austretende Strahlen bevorzugt in Faserrichtung polarisiert und sind dadurch nicht in der Sichtlinie s sichtbar. Eine weitere Differenzierung erfolgt bezüglich der Ein- und Ausfallswinkel, da der Brewsterwinkel in der Fasergeometrie für flache Winkel 10 und 11 statistisch seltener auftritt, als für steilere Winkel im Bereich 12. Auch hier ist eine leichte Einfärbung der Fasern sinnvoll. Neben der dekorativen Wirkung entsteht durch diese Maßnahme sogar eine Verstärkung des Polarisationsgrades.

Die bislang beschriebenen Maßnahmen sind durchaus mit den üblichen Fertigungstechniken von Instrumententafeln für Kraftfahrzeuge verträglich: Verwendung von pigmentierten oder Faserverbund-Kunststoffen, Laminieren, Kleben, Tiefziehen, Hinterspritzen, In Mould Techniken etc.. Ungewöhnlich, aber fertigungstechnisch beherrschbar erscheint die Realisierung der Luftspalte. Da diese keinen definierten Abstand besitzen müssen, reicht es, wenn die Verbindung zwischen Lichtleiter und Absorber stellenweise unterbrochen oder nicht dauerhaft eingestellt wird, beispielsweise durch Einbringen von Antihaft- oder Trennmittel, welche beim Verbindungsvorgang ein Benetzen der Materialpartner verhindern. Anzahl und Ausdehnung der Stützstellen sind so einzustellen, dass eine mechanisch stabile Konstruktion entsteht, andererseits genügend Licht für den gewünschten Farbton reflektiert werden kann. Vorteilhaft ist es, die Stützstellen und deren Abstände sehr klein zu wählen, z.B. im Millimeterbereich oder darunter, so dass keine für das Auge erkennbare Textur entsteht. Restliche Inhomogenitäten werden durch Pigmentierung und andere oben beschriebenen Maßnahmen zur Strahlauffächerung egalisiert.

Eine weitere erfindungsgemäße Variante besteht darin, statt der Luftspalte prismatische Einlagerungen, deren Brechungsindex deutlich über dem des Lichtleitermaterials liegen sollte, zu verwenden. Die Effekte der Einkopplung und der Totalreflexion, die oben für die gesamte Lichtleiterschicht beschrieben wurden (Fig. 2b und 2c) gelten entsprechend für hochbrechende Elemente, welche fest an der Grenzfläche zwischen Lichtleiter und Absorber eingebunden sind. Die Anordnung ist schematisch in Fig. 3 dargestellt. Für die Dimensionierung der Prismenelemente gelten ebenfalls die bereits erwähnten Zusammenhänge, d.h. sie sind bevorzugt sehr klein, aber größer als die Lichtwellenlänge auszulegen. Aus fertigungstechnischer Sicht erscheinen Basislängen von 10 Mikrometer bis 1 Millimeter vorteilhaft. Die Prismen können eine pyramiden-, kegel- oder linsenförmige Gestalt oder eine unregelmäßige Oberfläche besitzen. Wichtig ist lediglich, dass die Unterseite (Basis) der Elemente eben ausgebildet ist. Vorteilhaft verläuft die Basis im wesentlichen parallel zur Unterlage. Falls die Form der Frontablage von der einfachen, in Fig. 1 dargestellten Geometrie stärker abweicht, kann die Neigung der Basisflächen gegenüber der Unterlage als weitere Maßnahme zur optimalen Lichtleitung und Lichtverteilung genutzt werden.

### Bezugszeichenliste

- P: Punkt auf der Frontablage
- S: Spiegelpunkt auf der Windschutzscheibe
- 1: glatte Oberfläche der Oberflächenschicht
- 2: transparente Oberflächenschicht
- 3: innere Oberfläche der Oberflächenschicht (second surface)
- 4: Luftspalt
- 5: Absorberschicht
- 6: Rillenartige Oberfläche der Oberflächenschicht
- 7: Unregelmäßig strukturierte Oberfläche der Oberflächenschicht
- 8: Streukörper
- 9: Fasern parallel zur Sichtebene des Fahrers
- 10: einfallender Lichtstrahl
- 11: In Richtung p reflektiertes Licht
- 12: In Richtung s reflektiertes Licht

## Patentansprüche

1. Fahrzeuginnenraumverkleidung mit verringerter Blendwirkung an der Windschutzscheibe oder Heckscheibe, **gekennzeichnet durch** folgende Merkmale:
- eine transparente Oberflächenschicht (2), deren obere Grenzfläche (7) eine nichtglatte Struktur aufweist, wobei Teilbereiche der Grenzfläche (1) zur Windschutzscheibe oder Heckscheibe hin geneigt sind;
- eine unterhalb der Oberflächenschicht (2) angeordnete matte Absorberschicht (5);
- eine zwischen Oberflächenschicht (2) und Absorberschicht (5) vorhandene Zone mit totalreflektierender Wirkung für unter flachen Winkeln auftreffende, von außen in den Fahrzeuginnenraum einfallende Lichtstrahlen;
- Mittel (7,8,9) zur Zerstreuung des Lichts, so dass sich für den Fahrzeuginsassen ein natürlicher Helligkeitseindruck ergibt.

2. Fahrzeuginnenraumverkleidung nach Anspruch 1, **dadurch gekennzeichnet, dass** Winkelstellung, Ausdehnung und/oder Anzahl der zur Windschutzscheibe hin geneigten Flächenelemente der Oberflächenschicht (2) zur Steuerung der Intensität des totalreflektierten Lichts und damit zur Einstellung des von einem Fahrzeuginsassen wahrgenommenen Helligkeitseindruckes eingesetzt werden kann.

3. Fahrzeuginnenraumverkleidung nach einem der vorangehenden Ansprüche, **dadurch gekennzeichnet, dass** die Zone mit totalreflektierender Wirkung durch Luftspalte (4), die zwischen Oberflächenschicht (2) und Absorberschicht (5) vorhanden sind, gebildet ist.

4. Fahrzeuginnenraumverkleidung nach einem der Ansprüche 1 oder 2, **dadurch gekennzeichnet, dass** die Zone mit totalreflektierender Wirkung durch transparente Formkörper, die nahe oder an der Grenzfläche zwischen Oberflächenschicht (2) und Absorberschicht (5) vorhanden sind, gebildet ist, wobei die Formkörper einen Brechungsindex größer als das Material der Oberflächenschicht (2) aufweisen.

5. Fahrzeuginnenraumverkleidung nach Anspruch 4, **dadurch gekennzeichnet, dass** die Formkörper pyramidenartig, kegelartig, linsenartig oder unregelmäßig ausgebildet sind und eine im wesentlichen ebene Basis aufweisen.

6. Fahrzeuginnenraumverkleidung nach einem der vorangehenden Ansprüche, **dadurch gekennzeichnet, dass** zur Zerstreuung des Lichts obere und/oder untere Grenzfläche der Oberflächenschicht (2) regelmäßig oder unregelmäßig strukturiert sind.

7. Fahrzeuginnenraumverkleidung nach Anspruch 6, **dadurch gekennzeichnet, dass** die obere und/oder untere Grenzfläche der Oberflächenschicht (2) eine Struktur in Form von Prismen, Kegeln, Noppen, Rillen oder Wellen aufweist oder unregelmäßig genarbt ist.

8. Fahrzeuginnenraumverkleidung nach einem der vorangehenden Ansprüche, **dadurch gekennzeichnet, dass** zur Zerstreuung des Lichts Hohlräume oder transparente Streukörper (8) in die Oberflächenschicht (2) eingelagert sind, die einen vom Material der Oberflächenschicht (2) verschiedenen Brechungsindex aufweisen.

9. Fahrzeuginnenraumverkleidung nach einem der vorangehenden Ansprüche, **dadurch gekennzeichnet, dass** sie eine zumindest teilweise polarisierende Wirkung aufweist, wobei die Polarisationsebene in der Sichtebene des Fahrers liegt.

10. Fahrzeuginnenraumverkleidung nach Anspruch 9, **dadurch gekennzeichnet, dass** innerhalb der Oberflächenschicht (2), oberhalb oder unterhalb der Zone der transparenten Streukörper (8), ein Polfilter vorhanden ist.

11. Fahrzeuginnenraumverkleidung nach Anspruch 9, **dadurch gekennzeichnet, dass** innerhalb der Oberflächenschicht (2) hochbrechende, transparente Fasern (9) parallel zur Sichtebene des Fahrers eingelagert sind, die eine polarisierende und zugleich streuende Wirkung erzeugen.

12. Fahrzeuginnenraumverkleidung nach einem der vorangehenden Ansprüche, **dadurch gekennzeichnet, dass** die in der Oberflächenschicht (2) angeordneten Streukörper (8) oder Formkörper größer als die Lichtwellenlänge sind, bevorzugt im Größenbereich von 10 Mikrometer bis 1 Millimeter.

13. Fahrzeuginnenraumverkleidung nach einem der vorangehenden Ansprüche, **dadurch gekennzeichnet, dass** die in der Oberflächenschicht (2) angeordneten Streukörper (8) oder Formkörper neutralgrau oder in sonstigen hellen Farbtönen eingefärbt sind.
